# EUROPÄISCHE PATENTSCHRIFT

(11) **EP 4 244 582 B1**
(45) Veröffentlichungstag und Bekanntmachung des Hinweises auf die Patenterteilung: **12.11.2025**
(21) Anmeldenummer: 21783217.9
(22) Anmeldetag: 23.09.2021
(51) Int. Cl.: G01F 25/10, G01F 1/58, G01F 1/60

(54) **MAGNETISCH-INDUKTIVES DURCHFLUSSMESSGERÄT**
MAGNETIC-INDUCTIVE FLOW METER
DÉBITMÈTRE À INDUCTION MAGNÉTIQUE

(30) Priorität: 11.11.2020 DE 102020129772
(43) Veröffentlichungstag der Anmeldung: 20.09.2023
(73) Patentinhaber: Endress+Hauser Flowtec AG, 4153 Reinach (CH)
(72) Erfinder: BRÜTSCH, Tobias, 4051 Basel (CH); MARIAGER, Simon, 4059 Basel (CH); RÜFENACHT, Markus, 4442 Diepflingen (CH); WOHLGEMUTH, Werner, 4206 Seewen (CH)
(74) Vertreter: Endress + Hauser Group Services (Deutschland) AG+Co. KG
(86) Internationale Anmeldenummer: PCT/EP2021/076266
(87) Internationale Veröffentlichungsnummer: WO 2022/100917

(56) Entgegenhaltungen:
- DE-A1- 102008 054 432
- DE-A1- 102012 221 616
- US-A1- 2017 160 114
- US-A1- 2018 031 400

## Beschreibung

Die vorliegende Erfindung bezieht sich auf einen elektromagnetischen Strömungsmesser, insbesondere ein magnetisch-induktives Durchflussmessgerät zum Messen des Volumen- oder Massendurchflusses eines Fluids oder eines fließfähigen festen Stoffes, wobei das Fluid in einem ständigen Fluss durch das Instrument fließt.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, welches ein Magnetfeld senkrecht zur Flussrichtung des fließenden Mediums erzeugt. Dafür werden üblicherweise einzelne Spulen, seltener Permanentmagnete verwendet. Um ein überwiegend homogenes Magnetfeld zu realisieren, werden zusätzlich Polschuhe so geformt und an dem Messrohr angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz im Medium ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit u und, mit Hinzunahme eines bekannten Rohrquerschnitts, der Volumendurchfluss *V̇* ermittelt werden.

Magnetisch-induktive Durchflussmessgeräte finden vielfach Anwendung in der Prozess- und Automatisierungstechnik für Fluide ab einer elektrischen Leitfähigkeit von etwa 5 µS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Aufgrund der geforderten hohen mechanischen Stabilität für Messrohre von magnetisch-induktiven Durchflussmessgeräten, bestehen diese zumeist aus einem metallischen Trägerrohr von vorgebbarer Festigkeit und Weite, welches innen mit einem elektrisch isolierenden Material von vorgebbarer Dicke, dem so genannten Liner, ausgekleidet ist. Beispielsweise sind in der DE 10 2005 044 972 A1 und in der DE 10 2004 062 680 A1 jeweils magnetisch-induktive Messaufnehmer beschrieben, die ein in eine Rohrleitung einfügbares, ein einlassseitiges erstes Ende und ein auslassseitiges zweites Ende aufweisendes Messrohr mit einem nicht-ferromagnetischen Trägerrohr als eine äußere Umhüllung des Messrohrs, und einer in einem Lumen des Trägerrohrs untergebrachten, aus einem elektrisch isolierenden Material bestehenden rohrförmigen Auskleidung zum Führen eines strömenden und vom Trägerrohr elektrisch isolierten Messstoffs umfassen.

Die üblicherweise aus einem thermoplastischen, duroplastischen und/oder elastomeren Kunststoff bestehende Auskleidung dient unter anderem der chemischen Isolation des Trägerrohrs vom Messstoff. Bei magnetisch-induktiven Messaufnehmern, bei denen das Trägerrohr eine hohe elektrische Leitfähigkeit aufweist, beispielsweise bei Verwendung metallischer Trägerrohr, dient die Auskleidung außerdem zur elektrischen Isolation zwischen dem Trägerrohr und dem Messstoff, die ein Kurzschließen der im Messstoff induzierten Spannung über das Trägerrohr verhindert. Durch eine entsprechende Auslegung des Trägerrohrs ist insoweit also eine Anpassung der Festigkeit des Messrohrs an die im jeweiligen Einsatzfall vorliegenden mechanischen Beanspruchungen realisierbar, während mittels der Auskleidung eine Anpassung des Messrohrs an die für den jeweiligen Einsatzfall geltenden elektrischen, chemischen und/oder biologischen Anforderungen realisierbar ist.

Häufig wird zur Befestigung der Auskleidung auch ein sogenannter Stützkörper verwendet, der in die Auskleidung eingebettet ist. In der Patentschrift EP 0 766 069 B1 bspw. dient ein mit dem Trägerrohr verschweißtes Lochblechrohr als Stützkörper. Der Stützkörper wird mit dem Trägerrohr verbunden und in die Auskleidung eingebettet, indem das Material, aus welchem die Auskleidung besteht inwendig in das Trägerrohr aufgetragen wird. Weiterhin ist zur mechanischen Stabilisierung und zur elektrischen Abschirmung aus der Patentschrift US 4,513,624 A ein Messrohr mit einem Metallgehäuse bekannt geworden. Eigens zu diesem Zweck umgibt das Metallgehäuse dabei eine das Medium führende Rohrleitung.

Weiterhin sind magnetisch-induktive Durchflussmessgeräte bekannt, welche ein aus einem elektrisch isolierenden Material - bspw. Kunststoff, Keramik und/oder Glas - gebildeten Messrohrkörper aufweisen. Bei derartigen Messrohren wird auf eine isolierende Beschichtung verzichtet.

Es hat sich gezeigt, dass die elektrisch isolierende Auskleidung, aber auch der aus einem elektrisch isolierenden Material gebildete Messrohrkörper trotz der Verwendung von strapazierfähigen Materialien einer Erosion unterliegt. Insbesondere Messstoffe die feste Partikel - wie z.B. Sand, Kies und/oder Gestein - mit sich führen, verursachen eine Abrasion der Auskleidung der Rohrleitung bzw. des Messrohrkörpers. Infolge der Abrasion bzw. Deformation der Auskleidung oder des elektrisch isolierenden Messrohrkörpers verändert sich das Durchflussprofil des Messaufnehmers. Aufgrund dessen liefert die Messeinrichtung fehlerhafte Messwerte des Volumen- oder Massedurchflusses. Zudem geht bei Messrohren mit innenseitiger Auskleidung die chemische bzw. elektrische Isolation zwischen Messstoff und Trägerrohr verloren.

Die WO 2010/066518 A1 bzw. die DE 10 2008054432 A1 offenbart eine Messeinrichtung zur Bestimmung eines Volumen- und/oder Massedurchflusses eines durch ein Messrohr strömenden Messstoffes. Das Messrohr umfasst ein Trägerrohr mit einer inwendigen Auskleidung, umfassend eine erste Schicht und eine zweite Schicht, und eine Überwachungselektrode, die zwischen der ersten Schicht und der zweiten Schicht eingebettet ist und dazu eingerichtet ist eine Beschädigung der zweiten/ersten Schicht zu detektieren. Nachteilig daran ist jedoch, die Beeinflussung der Überwachung auf die Messung des Volumen- und/oder Massedurchflusses.

Der vorliegenden Erfindung liegt daher die Aufgabe zugrunde, eine alternative Lösung für ein magnetisch-induktives Durchflussmessgerät bereitzustellen, mit welcher eine Beschädigung der Auskleidung und/oder des elektrisch isolierenden Messrohrkörpers durch Abrieb detektiert werden kann, ohne die Messperformance zu beeinträchtigen. Erfindungsgemäß wird diese Aufgabe gelöst durch das magnetisch-induktive Durchflussmessgerät nach Anspruch 1.

Das erfindungsgemäße magnetisch-induktive Durchflussmessgerät umfasst:
- ein Messrohr zum Führen des Mediums,

wobei das Messrohr einen abschnittsweise elektrisch isolierend ausgebildeten Messrohrkörper umfasst;
   - eine Vorrichtung zum Erzeugen eines den Messrohrkörper durchdringenden Magnetfeldes;
   - eine Vorrichtung zum Erfassen einer strömungsgeschwindigkeitsabhängigen, induzierten Spannung im Medium;
   - eine Referenzelektrode;
   - eine Elektrodenanordnung zum Detektieren einer Beschädigung des Messrohrkörpers;
wobei die Elektrodenanordnung gegenüber der Referenzelektrode und/oder dem Medium durch den Messrohrkörper elektrisch isoliert ist; und
   - eine Messschaltung, die dazu eingerichtet ist, eine von einer elektrischen Impedanz abhängige Größe zwischen der Elektrodenanordnung und der Referenzelektrode zu messen.

Erfindungsgemäß ist vorgesehen, dass die Elektrodenanordnung mindestens zwei Überwachungselektroden umfasst, und dass die mindestens zwei Überwachungselektroden zumindest teilweise hohlzylindrisch oder ringförmig ausgebildet sind.

Erfindungsgemäß ist vorgesehen, dass der Messrohrkörper eine Messrohrkörperlängsrichtung aufweist,
wobei die mindestens zwei Überwachungselektroden koaxial zum Messrohrkörper orientiert und in der Messrohrkörperlängsrichtung versetzt zur Referenzelektrode angeordnet sind.

Die mindestens zwei Überwachungselektroden sind vorzugsweise eingangs- und/oder ausgangsseitig angeordnet, so dass das Messrohr einen Messrohrabschnitt aufweist, in welchem die Vorrichtung zum Erfassen der strömungsgeschwindigkeitsabhängigen, induzierten Spannung im Medium angeordnet, welcher jedoch frei von einer Überwachungselektrode ist. Dies hat den Vorteil, dass bei einem abrasionsbedingten Kurzschluss an mehreren Stellen an der Überwachungselektrode, der Messeinfluss auf die an der Vorrichtung zum Erfassen der strömungsgeschwindigkeitsabhängigen, induzierten Spannung anliegende Spannung gering ist.

Zudem hat eine derartige Ausgestaltung den Vorteil, dass eine Beschädigung des Messrohrkörpers bzw. der Auskleidung nicht nur lokal und somit punktuell, sondern über einen größeren Bereich detektierbar ist.

Die mindestens zwei Überwachungselektroden können separat mit der Messschaltung elektrisch verbunden sein und kommunizieren, oder miteinander elektrisch verbunden sein. Die erstgenannte Ausgestaltung hat den Vorteil, dass die Überwachung ortsaufgelöst erfolgen kann. Die zweitgenannte Ausgestaltung hat den Vorteil, dass sie einfach umzusetzen und mit Messschaltungen bereits bekannter magnetisch-induktiver Durchflussmessgeräte realisierbar sind.

Erfindungsgemäß ist vorgesehen, dass eine erste Überwachungselektrode der mindestens zwei Überwachungselektroden einen ersten Innendurchmesser aufweist,
wobei eine zweite Überwachungselektrode der mindestens zwei Überwachungselektroden einen zweiten Innendurchmesser aufweist,
wobei der erste Innendurchmesser von dem zweiten Innendurchmesser abweicht. Sind die mindestens zwei Überwachungselektroden separat mit der Messschaltung elektrisch verbunden und ist die Messschaltung dazu eingerichtet, an den mindestens zwei Überwachungselektroden jeweils ein Messsignal zu ermitteln, so lässt sich durch die Wahl des Innendurchmessers der Grad der Abrasion und die restliche Dicke der Auskleidung ermitteln.

Die abschnittsweise elektrische Isolierung des Messrohrkörpers kann durch eine elektrisch isolierende Auskleidung realisiert sein, die auf ein metallisches und somit leitfähiges Trägerrohr innenseitig aufgebracht ist. Alternativ kann der Messrohrkörper aus einen elektrisch isolierenden Kunststoff, eine Keramik und/oder Glas gebildet sein.

Die Impedanz - auch als Wechselstromwiderstand bezeichnet - ist ein elektrischer Widerstand in der Wechselstromtechnik und gibt bei einem zweipoligen Netzwerkelement das Verhältnis von elektrischer Spannung zur Stromstärke an. Der Begriff wird insbesondere dann verwendet, wenn zwischen den beiden Größen eine Phasenverschiebung besteht, wodurch sich das Verhältnis vom mittels Gleichstrom ermittelten Widerstand unterscheidet. Die Impedanz wird vorteilhaft als komplexwertige Funktion der Frequenz angegeben. Sie ist die Zusammenfassung von dem Verhältnis der Amplituden einer zeitlich veränderlichen Wechselspannung zu einem zeitlich veränderlichen Wechselstrom und der Verschiebung der Phasenwinkel zwischen diesen beiden Größen. Beide Eigenschaften werden durch Darstellung der Impedanz als komplexe Größe mathematisch zusammengefasst, insbesondere durch einen reellen Betrag der komplexen Impedanz, dem Scheinwiderstand, und den imaginären Teil, der durch eine Exponentialfunktion mit der imaginären Einheit und dem Phasenverschiebungswinkel im Exponenten, welcher Werte zwischen -90° und +90° annehmen kann. In anderer Schreibweise weist die Impedanz einen realen und imaginären Anteil auf. Der phasenverschiebende Anteil ist frequenzabhängig, der nicht phasenverschiebende Anteil kann entweder von der Frequenz abhängig sein, ist aber in der Regel zumindest für einen in der Elektronik verwendeten Frequenzbereich Frequenz unabhängig.

Die Messschaltung ist dazu eingerichtet, ein zeitlich veränderliches Anregungssignal auf die Elektrodenanordnung aufzuprägen, insbesondere mit mindestens einer Anregungsfrequenz. Das Anregungssignal wird mit einer Spannungsquelle an der Elektrodenanordnung gegen ein Referenzpotential, bevorzugt gegen das Massepotential erzeugt. Weiterhin ist die Messschaltung dazu eingerichtet, ein Messsignal an der Elektrodenanordnung zu messen.

Gemäß einer Ausgestaltung ist das Anregungssignal ein Wechselspannungssignal, insbesondere ein Multifrequenzspannungssignal. Das Anregungssignal ist als Wechselspannungssignal ausgebildet, da Gleichspannungssignale für Störungen bei der Durchflussmessung sorgen. Es ist vorteilhaft, wenn die Frequenz des Wechselspannungssignales in einem Frequenzbereich von 1 Hz bis 10 kHz liegt. Bei dem Multifrequenzspannungssignal ändern sich die Spannungswerte periodisch mit mindestens zwei Frequenzen. Vorteilhafter Weise weist das Wechselspannungssignal für einen erstes Zeitintervall eine erste Frequenz auf und ändert dann, für ein darauffolgendes zweites Zeitintervall die Frequenz des Wechselspannungssignales.

Die Funktion einer Referenzelektrode besteht darin, für einen Potentialausgleich zwischen Fluid und Messaufnehmer zu sorgen. Als Referenzelektrode werden üblicherweise stirnseitig angeordnete Erdungsscheiben und/oder Elektroden - in der Regel Stift-, Pilzkopf oder Bürstenelektroden - verwendet, welche in einer Öffnung im Messrohrmantel, üblicherweise in einer gemeinsamen Messebene mit den Messelektroden mediumsberührend angeordnet sind. Üblicherweise wird die Referenzelektrode mit dem Gehäuse der Messelektronik, der Rohrleitung elektrisch verbunden. Das Gehäuse ist typischerweise mit der Schutzerde verbunden. Es sind bereits magnetisch-induktive Durchflussmessgeräte auf dem Markt, dessen Referenzelektrode erdfrei ist.

Eine Messschaltung ist ein Zusammenschluss von elektrischen bzw. elektromechanischen Bauelementen (wie z.B. Verstärker, Anschluss, Analog-DigitalWandler, Transistor, Batterie, Schalter, Anzeige, ...) zu einer funktionsgerechten Anordnung. Verwendbar wird die Schaltung durch einen elektrischen Strom durch ihre Bauelemente; dazu ist mindestens eine in der Schaltung enthaltene elektrische Energiequelle in einem geschlossenen Stromkreis erforderlich. Diese kann intern als Batterie oder als externe Energiequelle realisiert sein. Die Messschaltung kann funktionale Einzelelemente aufweisen, die logische Operationen ausführen können.

Vorteilhafte Ausgestaltung der Erfindung sind Gegenstand der Unteransprüche.
Eine Ausgestaltung sieht vor, dass die Elektrodenanordnung mindestens eine Überwachungselektrode umfasst,
wobei die Überwachungselektrode eine Überwachungselektrodenlängsrichtung aufweist,
wobei die Überwachungselektrode eine Materialstärke D aufweist,
wobei die Materialstärke D in der Überwachungselektrodenlängsrichtung zumindest teilweise bevorzugt stufenförmig zunimmt.

Ein Vorteil der teilweisen Zunahme der Materialstärke ist, dass bspw. bei einer insbesondere homogenen Abrasion der Überwachungselektrode eine mit dem Medium in einem galvanischen Kontakt stehende Kontaktfläche der Überwachungselektrode zunimmt. Dies spiegelt sich im Messsignal wider, wodurch anhand des sich ändernden Messsignales bzw. von der Impedanz abhängigen Größe eine Bestimmung erfolgen kann, um wieviel der Liner bereits abgetragen wurde.

Aufgrund des Vorhandenseins einer stufenförmigen Zunahme der Materialstärke ergibt sich der Vorteil, dass bei einer Abrasion der Überwachungselektrode die Kontaktfläche mit dem Medium nicht kontinuierlich, sondern diskret zunimmt, was sich wiederum auf das Messsignal auswirkt. Somit lässt sich anhand eine stufenartigen Veränderung des Messsignales ein Grad der Abrasion bzw. eine verbleibende Linerdicke bestimmen.

Eine Ausgestaltung sieht vor, dass die mindestens zwei Überwachungselektroden in Messrohrkörperlängsrichtung insbesondere koaxial, versetzt zueinander angeordnet sind.

Diese Ausgestaltung bildet eine Alternative zu den Überwachungselektroden mit stufenförmig ausgebildeten Überwachungselektrodenkörper und ermöglichen es eine Abrasion ortsaufgelöst zu ermitteln.

Eine Ausgestaltung sieht vor, dass die erste Überwachungselektrode zumindest in einem Teilabschnitt in radialer Richtung durch die zweite Überwachungselektrode umschlossen ist.

Weist die zweite Überwachungselektrode eine von der Länge der ersten Überwachungselektrode abweichende Länge in Längsrichtung auf, so lässt sich anhand des Messsignales eine verbleibende Dicke der Auskleidung ermitteln. Mit zunehmender Abrasion entsteht zuerst zwischen dem Medium und der ersten bzw. zweiten Überwachungselektrode ein galvanischer Kontakt und folgend zwischen der zweiten bzw. ersten Überwachungselektrode und dem Medium. Dies spiegelt sich im Messsignal wider, unabhängig davon, ob die mindestens zwei Überwachungselektroden miteinander kurzgeschlossen sind, oder separat durch die Messschaltung bemessen werden.

Eine Ausgestaltung sieht vor, dass die Messschaltung dazu eingerichtet ist, bei einer Abweichung der von einer elektrischen Impedanz abhängigen Größe, insbesondere von einer Phasenverschiebung von einem Sollwert oder von einem Akzeptanzbereich das Vorliegen eines Defektes, insbesondere einer Abrasion des Messrohrkörpers bzw. der Auskleidung zu signalisieren.

Die Erfindung wird anhand der nachfolgenden Figuren näher erläutert, ohne die Erfindung auf diese zu beschränken. Es zeigt:
Fig. 1: ein magnetisch-induktives Durchflussmessgerät nach dem Stand der Technik;
Fig. 2: eine erste nicht erfindugsgemässe Ausgestaltung einer Elektrodenanordnung zum Detektieren einer Beschädigung des Messrohrkörpers eines magnetisch-induktiven Durchflussmessgerätes;
Fig. 3: eine zweite nicht erfindugsgemässe Ausgestaltung der Elektrodenanordnung;
Fig. 4: eine dritte nicht erfindugsgemässe Ausgestaltung der Elektrodenanordnung mit mindestens einer stufenförmigen Überwachungselektrode;
Fig. 5: eine vierte Ausgestaltung der Elektrodenanordnung mit mindestens drei Überwachungselektroden;
Fig. 6: eine fünfte nicht erfindugsgemässe Ausgestaltung der Elektrodenanordnung;
Fig. 7: eine sechste nicht erfindugsgemässe Ausgestaltung der Elektrodenanordnung; und
Fig. 8: eine siebte nicht erfindugsgemässe Ausgestaltung der Elektrodenanordnung mit mindestens zwei Überwachungselektroden.

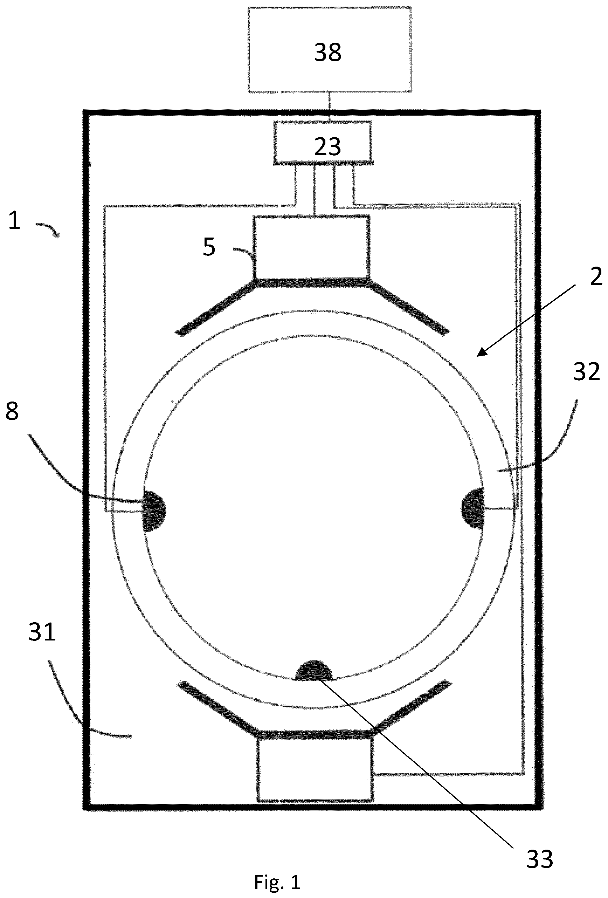

Die Fig. 1 zeigt ein aus dem Stand der Technik bekanntes magnetisch-induktives Durchflussmessgerät 1. Der Aufbau und das Messprinzip eines magnetisch-induktiven Durchflussmessgerätes 1 sind grundsätzlich bekannt. Durch ein Messrohr 2 wird ein Medium geleitet, welches eine elektrische Leitfähigkeit aufweist. Das Messrohr 2 kann beispielsweise als ein aus Metall gebildetes Trägerrohr mit einer innenseitig aufgebrachten Auskleidung ausgestaltet sein, oder einen Messrohrkörper aufweisen, der im Wesentlichen aus einem elektrisch isolierenden Material, wie Kunststoff, Keramik, Glas und/oder Beton gebildet ist. Eine Vorrichtung 5 zum Erzeugen eines Magnetfeldes ist so am Messrohr 2 angebracht, dass sich die Magnetfeldlinien im Wesentlichen senkrecht zu einer durch eine Messrohrachse definierten Längsrichtung orientieren. Als Vorrichtung 5 zum Erzeugen des Magnetfeldes eignet sich vorzugsweise eine Sattelspule oder ein Polschuh mit aufgesetzter Spule und Spulenkern. Bei angelegtem Magnetfeld entsteht im Messrohr 2 eine durchflussabhängige Potentialverteilung, die mit einer Vorrichtung 8 zum Erfassen einer induzierten Spannung, bevorzugt mit zwei an der Innenwand des Messrohres 2 gegenüberliegend angebrachten Messelektroden abgegriffen wird. In der Regel sind diese diametral angeordnet und bilden eine Elektrodenachse bzw. werden durch eine Querachse geschnitten, die senkrecht zu den Magnetfeldlinien und der Messrohrachse verläuft. Anhand der gemessenen Messspannung U kann, unter Berücksichtigung der magnetischen Flussdichte, die Durchflussgeschwindigkeit und, unter zusätzliche Berücksichtigung der Rohrquerschnittsfläche, der Volumendurchfluss des Mediums bestimmt werden. Um das Ableiten der an der ersten und zweiten Messelektrode anliegenden Messspannung über ein metallisches Trägerrohr zu verhindern, wird die Innenwand des Trägerrohrs mit einer elektrisch isolierenden Auskleidung - einem sogenannten Liner - versehen. Das durch die Vorrichtung 5, beispielsweise einen Elektromagneten, aufgebaute Magnetfeld wird durch einen mittels einer Betriebsschaltung getakteten Gleichstrom wechselnder Polarität erzeugt. Dies gewährleistet einen stabilen Nullpunkt und macht die Messung unempfindlich gegenüber Einflüssen durch elektrochemische Störungen. Eine Messschaltung 23 ist dazu eingerichtet, die an der ersten Messelektrode und der zweiten Messelektroden anliegende Messspannung auszulesen. Eine Auswerteschaltung ist dazu eingerichtet, die Durchflussgeschwindigkeit und/oder den Volumendurchfluss des Mediums zu ermitteln und diese bspw. über eine Anzeige 38 dem Anwender auszugeben. Handelsübliche magnetisch-induktive Durchflussmessgeräte 1 weisen zusätzlich zu den Messelektroden weitere Elektroden auf. Zum einen dient eine optimalerweise am höchsten Punkt im Messrohr 2 angebrachte Füllstandsüberwachungselektrode (in Fig. 1 nicht abgebildet) dazu, eine Teilbefüllung des Messrohres 2 zu detektieren, und ist dazu eingerichtet diese Information an den Nutzer weiterzuleiten und/oder den Füllstand bei der Ermittlung des Volumendurchflusses zu berücksichtigen. Des Weiteren dient eine Bezugselektrode 33, die üblicherweise diametral zur Füllstandsüberwachungselektrode bzw. am untersten Punkt des Rohrquerschnittes angebracht ist, dazu eine ausreichende Erdung des zu leitenden Mediums zu gewährleisten.

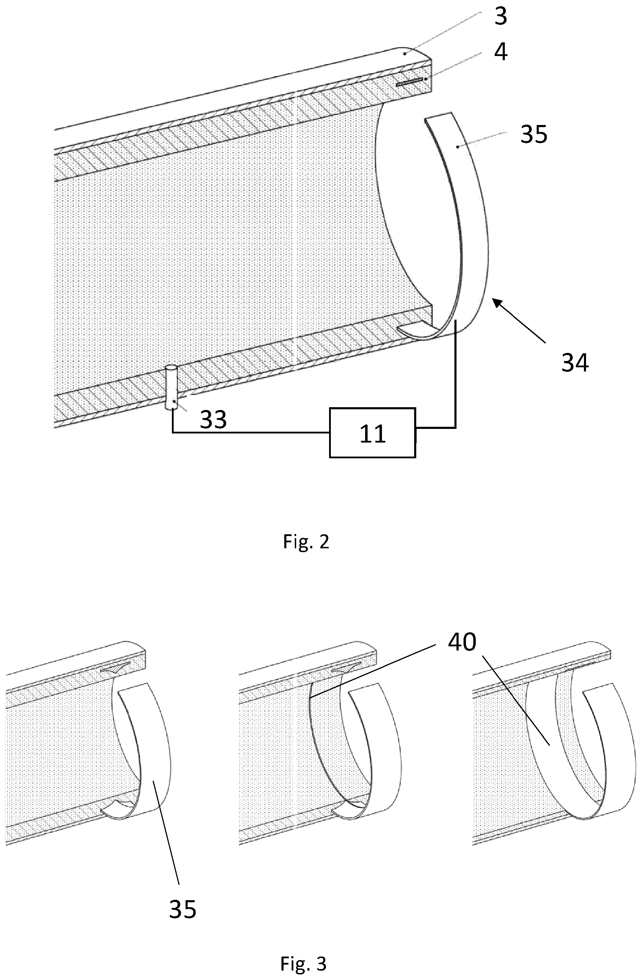

Die Fig. 2 zeigt eine erste nicht erfindugsgemässe Ausgestaltung der Elektrodenanordnung 34 zum Detektieren einer Beschädigung des Messrohrkörpers eines magnetisch-induktives Durchflussmessgerätes 1. Das magnetisch-induktive Durchflussmessgerät 1 umfasst ein Messrohr 2 zum Führen des Mediums mit einen abschnittsweise elektrisch isolierend ausgebildeten Messrohrkörper 32, welcher in der abgebildeten Ausgestaltung durch ein Trägerrohr 3 und eine innenseitig angeordnete elektrisch isolierender Liner 4 gebildet ist, der sich an der Innenseite des Trägerrohrs 3 entlang der Messrohrkörperlängsrichtung erstreckt. Eine Referenzelektrode 33 erstreckt sich durch eine vorgesehene Öffnung im Trägerrohr 3 und durch den Liner 4. Die Referenzelektrode 33 ist mediumsberührend ausgebildet und dazu eingerichtet, das zu führende Medium mit einem Referenzpotential elektrisch zu verbinden. Alternativ kann die Referenzelektrode 33 ebenfalls wie die Elektrodenanordnung 34 vollständig im Liner oder im elektrisch isolierenden Messrohrkörper eingebettet sein. Die Ausgestaltungen zeigen jeweils eine als Stiftelektrode ausgebildete Referenzelektrode 33. In Anwendungen mit stark abrasiven Medium kommen auch Bürstenelektroden, vorzugsweise aus Stahl zum Einsatz. Erfindungsgemäß ist eine Elektrodenanordnung 34 zum Detektieren einer Beschädigung des Messrohrkörpers 32 am Messrohr 2 angeordnet. Gemäß der ersten Ausgestaltung umfasst die Elektrodenanordnung 34 eine eingangs- und/oder ausgangsseitig angeordnete Überwachungselektrode 35. Diese ist gegenüber der Referenzelektrode 33 und dem Medium durch den Messrohrkörper 32 elektrisch isoliert. Dies ist durch ein Einbetten der Überwachungselektrode 35 im elektrisch isolierenden Liner 4 realisiert. Die mindestens eine abgebildete Überwachungselektrode 35 ist hohlzylindrisch bzw. ringförmig ausgebildet und koaxial zum Messrohr 2, insbesondere zum Trägerrohr 3 orientiert. Sie weist eine Überwachungselektrodenlängsrichtung auf und eine Materialstärke D, welche in der Überwachungselektrodenlängsrichtung konstant ist. Zudem ist die Überwachungselektrode 35 in der Messrohrkörperlängsrichtung versetzt zur Referenzelektrode 33 angeordnet. Die Referenzelektrode 33 ist in einem Messrohrabschnitt angeordnet, welcher frei von der Elektrodenanordnung 34, insbesondere der mindestens einen Überwachungselektrode 35 ist. Die Elektrodenanordnung 34, insbesondere die mindestens eine Überwachungselektrode 35 ist mit einer Messschaltung 11 elektrisch verbunden, welche dazu eingerichtet ist, eine von einer elektrischen Impedanz abhängige Größe zwischen der Elektrodenanordnung 34, in dem Fall der mindestens einen Überwachungselektrode 35 und der Referenzelektrode 33 zu messen. Bei der von der elektrischen Impedanz abhängigen Größe kann es sich um eine Phasenverschiebung zwischen Erregersignal und Messsignal handeln. Die elektrische Verbindung der Elektrodenanordnung 34 kann über einen elektrischen Leiter (nicht abgebildet) erfolgen, welcher ebenfalls in der Auskleidung eingebettet ist und durch eine vorgesehene Öffnung zur außerhalb des Messrohres 2 angeordneten Messschaltung 11 verläuft.

Die Bestimmung der von der Impedanz abhängigen Größe erfolgt durch ein Anlegen eines Erregersignals mit mindestens einer Frequenz an die Überwachungselektrode 35. Das Messsignal wird an der Überwachungselektrode 35 gegen die Referenzelektrode 33 ermittelt. Die Messschaltung ist entsprechend dazu eingerichtet.

Die Überwachungselektrode 35 kann als ein separates Bauteil - in Form eines metallischen Ringes - in die Auskleidung oder in den Messrohrkörper eingebettet sein oder alternativ durch lokales Dotieren der Auskleidung aus Kunststoff oder durch Aufbringen eines leitfähigen Kunststoffes realisiert werden.

Alle Merkmale, welche sich nicht auf die Anzahl, Form und Position der Überwachungselektroden beziehen, finden auch Anwendung auf die anschließenden Ausgestaltungen.

Die Fig. 3 zeigt eine zweite nicht erfindugsgemässe Ausgestaltung der Elektrodenanordnung 34, welche besonders dazu geeignet ist, eine kontinuierliche Abnahme der Dicke der Auskleidung durch Abrasion zu detektieren. Dafür weist die Überwachungselektrode 35 eine Materialstärke D auf, die in Überwachungselektrodenlängsrichtung zumindest teilweise kontinuierlich zunimmt. Gemäß der abgebildeten Ausgestaltung nimmt die Materialstärke D der Überwachungselektrode 35 ausgehend den äußersten Überwachungselektrodenquerschnitten in Richtung eines mittig orientierten Überwachungselektrodenquerschnittes kontinuierlich zu. Die Überwachungselektrode 35 läuft in Richtung eines auf der Überwachungselektrodenlängsachse befindlichen Mittelpunktes spitz zu.

Die drei Darstellungen zeigen eine idealisierte Entwicklung einer Abrasion, bei der die Dicke des Liners und der Überwachungselektrode homogen verteilt abnimmt. Mit zunehmender Abrasion nimmt die Dicke der Auskleidung ab eine Kontaktfläche der Überwachungselektrode zum Medium zu, was sich in der ermittelten Impedanz bemerkbar macht. Abhängig von dem Material der Überwachungselektrode kann auch diese durch die Abrasion abgerieben werden. Die variable Materialstärke D der Überwachungselektrode 35 bewirkt in dem Fall, dass die Kontaktfläche ebenfalls zunimmt.

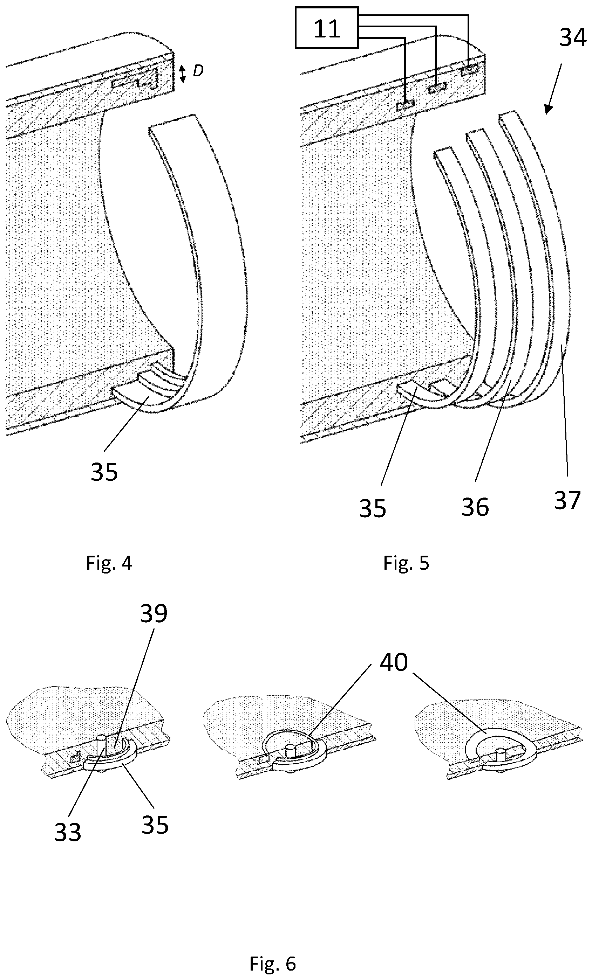

Die Fig. 4 zeigt eine dritte nicht erfindugsgemässe Ausgestaltung der Elektrodenanordnung 34 mit mindestens einer stufenförmigen Überwachungselektrode 35. Die abgebildete Überwachungselektrode 35 weist eine Materialstärke D auf, die in der Überwachungselektrodenlängsrichtung stufenförmig zunimmt. Die abgebildete Variante der Überwachungselektrode 35 weist drei Stufen auf. Bei einer homogenen Abrasion der Auskleidung und gegebenenfalls auch der Überwachungselektrode 35 ändert sich die von der Impedanz abhängige Größe sprunghaft. Anhand dieser Änderung lässt sich ein Grad der Abrasion oder eine verbleibende Dicke der Auskleidung bestimmen.

Die Fig. 5 zeigt eine vierte Ausgestaltung einer Elektrodenanordnung 34 mit mindestens drei Überwachungselektroden 35, 36, 37. Diese sind eingangs- und/oder ausgangsseitig im Messrohr angeordnet und unterscheiden sich jeweils in ihren Innendurchmessern und Außendurchmessern. Die mindestens drei Überwachungselektroden 35, 36, 37 sind zudem in Messrohrkörperlängsrichtung versetzt und nach der Größe des Innendurchmessers sortiert angeordnet. Alle Überwachungselektroden sind separat mit der Messschaltung 11 elektrisch verbunden.

Alternativ können Überwachungselektroden 35, 36, 37 mit im Wesentlichen gleichen Außendurchmesser, aber jeweils unterschiedlichen Innendurchmessern - d.h. unterschiedlichen Materialstärken - vorgesehen sein. Bei einer koaxialen Anordnung der Überwachungselektroden 35, 36, 37 können diese elektrisch miteinander kurzgeschlossen sein. Mit zunehmender Abrasion nimmt auch die Gesamtkontaktfläche zwischen Elektrodenanordnung und Medium zu, wobei sich die Gesamtkontaktfläche aus den einzelnen Kontaktflächen der Überwachungselektroden 35, 36, 37 ergibt.

Die Fig. 6 zeigt eine fünfte nicht erfindugsgemässe Ausgestaltung der Elektrodenanordnung 34 mit einer Überwachungselektrode, die eine Öffnung 39 aufweist, durch welche sich die Referenzelektrode 33 erstreckt. Die Referenzelektrode 33, welche sich durch den Messrohrkörper 32 erstreckt ist dazu eingerichtet, das Medium mit einem Referenzpotential elektrisch zu verbinden. Die Überwachungselektrode 35 weist eine Materialstärke D auf, die in der Überwachungselektrodenlängsrichtung stufenförmig zunimmt. In der abgebildeten Ausgestaltung weist die Überwachungselektrode 35 genau zwei Stufen auf, die sich jeweils durch die abschnittsweise unterschiedlichen Materialstärken ausbilden.

Die drei Darstellungen zeigen - ebenfalls wie in Fig. 3 - eine idealisierte Entwicklung einer Abrasion, bei der die Dicke des Liners und der Überwachungselektrode homogen verteilt abnimmt. Mit zunehmender Abrasion nimmt eine Kontaktfläche der Überwachungselektrode zum Medium zu, was sich in der ermittelten Impedanz bemerkbar macht.

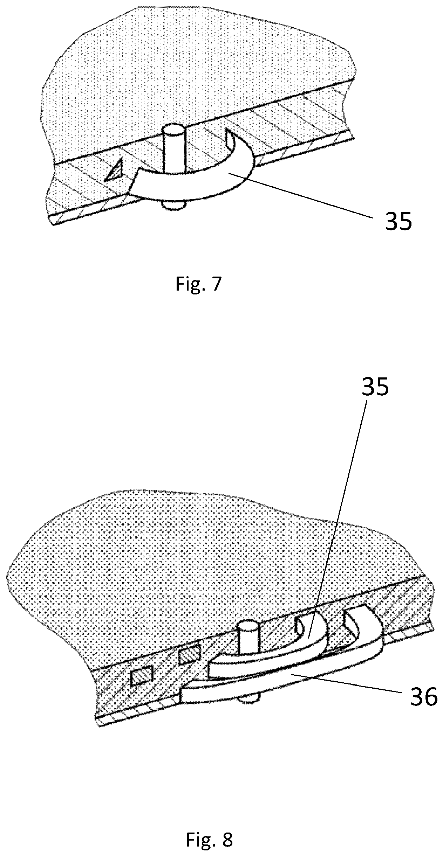

Die Fig. 7 zeigt eine sechste nicht erfindugsgemässe Ausgestaltung der Elektrodenanordnung 34 mit einer Überwachungselektrode 35. Anders als in Fig. 6 abgebildet, nimmt die Materialstärke D in Richtung Überwachungselektrodenlängsachse kontinuierlich zu. Die Überwachungselektrode 35 weist in einem Längsschnitt eine dreieckige Längsschnittfläche auf.

Die Fig. 8 zeigt eine siebte nicht erfindugsgemässe Ausgestaltung der Elektrodenanordnung 34 mit zwei Überwachungselektroden 35, 36, welche jeweils die Referenzelektrode 33 in radialer Richtung umschließen. Die erste Überwachungselektrode 35 und die zweite Überwachungselektrode 36 weisen jeweils eine Öffnung auf. Die Referenzelektrode 33 erstreckt sich durch die jeweilige Öffnung. Alternativ kann sich die erste Überwachungselektrode 35 auch durch die Öffnung der zweiten Überwachungselektrode 36 erstrecken, wodurch die erste Überwachungselektrode 35 zumindest in einem Teilabschnitt in radialer Richtung durch die zweite Überwachungselektrode 36 umschlossen ist. In der abgebildeten Asugestaltung ist die erste Überwachungselektrode 35 in Richtung der Überwachungselektrodenlängsachse versetzt zur zweiten Überwachungselektrode 36 angeordnet. Die erste Überwachungselektrode 35 und die zweite Überwachungselektrode 36 können jeweils mit einer Messschaltung elektrisch verbunden sein, so dass separat bestimmbar ist, wenn die Überwachungselektrode 35, 36 in Kontakt mit dem Medium gelangt.

Aus Übersichtsgründen wurde bei den Fig. 2 bis 8 auf eine Abbildung der Vorrichtung zum Erzeugen des den Messrohrkörper durchdringenden Magnetfeldes und einer Vorrichtung zum Erfassen einer strömungsgeschwindigkeitsabhängigen, induzierten Spannung im Medium verzichtet.

### Bezugszeichenliste

magnetisch-induktives Durchflussmessgerät 1
Messrohr 2
Trägerrohr 3
Liner 4
Vorrichtung zum Erzeugen eines Magnetfeldes 5
Vorrichtung zum Erfassen einer induzierten Spannung 8
Messschaltung 11
Messschaltung 23
Gehäuse 31
Messrohrkörper 32
Referenzelektrode 33
Elektrodenanordnung 34
erste Überwachungselektrode 35
zweite Überwachungselektrode 36
dritte Überwachungselektrode 37
Anzeige 38
Öffnung 39
Kontaktfläche 40

## Patentansprüche

1. Magnetisch-induktives Durchflussmessgerät (1), umfassend:
- ein Messrohr (2) zum Führen des Mediums,
wobei das Messrohr (2) einen abschnittsweise elektrisch isolierend ausgebildeten Messrohrkörper (32) umfasst;
- eine Vorrichtung (5) zum Erzeugen eines den Messrohrkörper (32) durchdringenden Magnetfeldes;
- eine Vorrichtung (8) zum Erfassen einer strömungsgeschwindigkeitsabhängigen, induzierten Spannung im Medium;
- eine Referenzelektrode (33);
- eine Elektrodenanordnung (34) zum Detektieren einer Beschädigung des Messrohrkörpers (32),
wobei die Elektrodenanordnung (34) gegenüber der Referenzelektrode (33) und/oder dem Medium durch den Messrohrkörper (32) elektrisch isoliert ist;
- eine Messschaltung (11), die dazu eingerichtet ist, eine von einer elektrischen Impedanz abhängige Größe zwischen der Elektrodenanordnung (34) und der Referenzelektrode (33) zu messen,
**dadurch gekennzeichnet, dass** die Elektrodenanordnung (34) mindestens zwei Überwachungselektroden (35) umfasst,
dass die mindestens zwei Überwachungselektroden (35) zumindest teilweise hohlzylindrisch oder ringförmig ausgebildet sind,
wobei der Messrohrkörper (32) eine Messrohrkörperlängsrichtung aufweist,
wobei die mindestens zwei Überwachungselektroden (35) koaxial zum Messrohrkörper (32) orientiert und in der Messrohrkörperlängsrichtung versetzt zur Referenzelektrode (33) angeordnet sind,
wobei eine erste Überwachungselektrode (35) der mindestens zwei Überwachungselektroden (35, 36) einen ersten Innendurchmesser aufweist,
wobei eine zweite Überwachungselektrode (35) der mindestens zwei Überwachungselektroden (35, 36) einen zweiten Innendurchmesser aufweist,
wobei der erste Innendurchmesser von dem zweiten Innendurchmesser abweicht.

2. Magnetisch-induktives Durchflussmessgerät nach Anspruch 1,
wobei die Überwachungselektroden (35) eine Überwachungselektrodenlängsrichtung aufweisen,
wobei die Überwachungselektroden (35) eine Materialstärke *D* aufweisen,
wobei die Materialstärke D in der Überwachungselektrodenlängsrichtung zumindest teilweise bevorzugt stufenförmig zunimmt.

3. Magnetisch-induktives Durchflussmessgerät nach Anspruch 1 oder 2,
wobei die mindestens zwei Überwachungselektroden (35, 36) in Messrohrkörperlängsrichtung insbesondere koaxial, versetzt zueinander angeordnet sind.

4. Magnetisch-induktives Durchflussmessgerät nach Anspruch 1 oder 2,
wobei die erste Überwachungselektrode (35) zumindest in einem Teilabschnitt in radialer Richtung durch die zweite Überwachungselektrode (36) umschlossen ist.

## Claims

1. A magneto-inductive flowmeter (1), comprising:
- A measuring tube (2) for conducting the medium,
wherein the measuring tube (2) comprises a measuring tube body (32) that is electrically insulating in sections;
- a device (5) for generating a magnetic field which penetrates the measuring tube body (32);
- a device (8) for detecting a voltage induced in the medium dependent on the flow velocity;
- a reference electrode (33);
- an electrode arrangement (34) for detecting damage to the measuring tube body (32),
wherein the electrode arrangement (34) is electrically insulated from the reference electrode (33)
and/or the medium by the measuring tube body (32);
- a measuring circuit (11) which is configured to measure a variable dependent on an electrical impedance between the electrode arrangement (34) and the reference electrode (33),
**characterized in that** the electrode arrangement (34) comprises at least two monitoring electrodes (35),
**in that** the at least two monitoring electrodes (35) are at least partially hollow cylindrical or annular,
wherein the measuring tube body (32) has a measuring tube body longitudinal direction, wherein the at least two monitoring electrodes (35) are oriented coaxially to the measuring tube body (32) and are arranged offset from the reference electrode (33) in the measuring tube body longitudinal direction,
wherein a first monitoring electrode (35) of the at least two monitoring electrodes (35, 36) has a first internal diameter,
wherein a second monitoring electrode (35) of the at least two monitoring electrodes (35, 36) has a second internal diameter,
wherein the first internal diameter is different from the second internal diameter.

2. The magneto-inductive flowmeter as claimed in claim 1,
wherein the monitoring electrodes (35) have a monitoring electrode longitudinal direction,
wherein the monitoring electrodes (35) have a material thickness,
wherein the material thickness D increases in the monitoring electrode longitudinal direction, preferably at least partially in steps.

3. The magneto-inductive flowmeter as claimed in claim 1 or 2,
wherein the at least two monitoring electrodes (35, 36) are arranged offset from each other, in particular coaxially, in the measuring tube body longitudinal direction.

4. The magneto-inductive flowmeter as claimed in claim 1 or 2,
wherein the first monitoring electrode (35) is surrounded by the second monitoring electrode (36) at least in a partial section in the radial direction.

## Revendications

1. Débitmètre électromagnétique (1), comprenant :
- un tube de mesure (2) destiné à guider le produit,
le tube de mesure (2) comprenant un corps de tube de mesure (32) réalisé de manière électriquement isolante par sections ;
- un dispositif (5) destiné à générer un champ magnétique traversant le corps de tube de mesure (32) ;
- un dispositif (8) destiné à mesurer une tension induite dans le produit, laquelle tension dépend de la vitesse d'écoulement ;
- une électrode de référence (33) ;
- un agencement d'électrodes (34) destiné à détecter un endommagement du corps de tube de mesure (32), l'agencement d'électrodes (34) étant isolé électriquement de l'électrode de référence (33) et/ou du produit à travers le corps de tube de mesure (32) ;
- un circuit de mesure (11), lequel est conçu pour mesurer une grandeur dépendant d'une impédance électrique entre l'agencement d'électrodes (34) et l'électrode de référence (33),
**caractérisé**
**en ce que** l'agencement d'électrodes (34) comprend au moins deux électrodes de surveillance (35),
**en ce que** les au moins deux électrodes de surveillance (35) sont réalisées au moins partiellement en forme de cylindre creux ou d'anneau,
le corps de tube de mesure (32) présentant une direction longitudinale de corps de tube de mesure, les au moins deux électrodes de surveillance (35) étant orientées coaxialement par rapport au corps de tube de mesure (32) et étant décalées par rapport à l'électrode de référence (33) dans la direction longitudinale du corps de tube de mesure,
une première électrode de surveillance (35) des au moins deux électrodes de surveillance (35, 36) présentant un premier diamètre intérieur,
une deuxième électrode de surveillance (35) des au moins deux électrodes de surveillance (35, 36) présentant un deuxième diamètre intérieur
le premier diamètre intérieur différant du deuxième diamètre intérieur.

2. Débitmètre électromagnétique selon la revendication 1,
pour lequel les électrodes de surveillance (35) présentent une direction longitudinale d'électrode de surveillance,
pour lequel les électrodes de surveillance (35) présentent une épaisseur de matériau D,
l'épaisseur de matériau *D* augmentant dans la direction longitudinale d'électrode de surveillance au moins partiellement de préférence par paliers.

3. Débitmètre électromagnétique selon la revendication 1 ou 2,
pour lequel les au moins deux électrodes de surveillance (35, 36) sont disposées de manière décalée l'une par rapport à l'autre, notamment de manière coaxiale, dans la direction longitudinale du corps de tube de mesure.

4. Débitmètre électromagnétique selon la revendication 1 ou 2,
pour lequel la première électrode de surveillance (35) est entourée par la deuxième électrode de surveillance (36) au moins dans une section partielle en direction radiale.
